# EUROPEAN PATENT SPECIFICATION

(11) **EP 0 231 659 B1**
(45) Date of publication and mention of the grant of the patent: **20.01.1993**
(21) Application number: 86310156.4
(22) Date of filing: 24.12.1986
(51) Int. Cl.: G11B 15/02

(54) **Remote control systems and commanders**
Fernbedienungssysteme und -betätigungsgeräte
Systèmes et appareils de télécommande

(30) Priority: 27.12.1985 JP 295292/85
(43) Date of publication of application: 12.08.1987
(73) Proprietor: SONY CORPORATION, Tokyo 141 (JP)
(72) Inventor: Shimada, Keiichiro Patents Division Sony Corp., Tokyo 141 (JP); Wakahara, Tatsuya Patents Division Sony Corp., Tokyo 141 (JP)
(74) Representative: Cotter, Ivan John

(56) References cited:
- EP-A- 0 002 434
- WO-A-81/03713
- FR-A- 2 491 707
- GB-A- 2 006 559
- US-A- 4 045 777
- US-A- 4 527 204
- US-A- 4 539 711
- Electronic Design, 1 September 1980, page 861

## Description

This invention relates to systems for remotely controlling an apparatus, for example a video tape recording and reproducing apparatus (also known as a video tape recorder or VTR) and so forth.

In recent years, there has been a need for various electrical or electronic apparatuses, such as VTRs and so forth, to be able to perform an increasing number of functions. For example, a modern VTR may have to carry out, not only video recording and reproducing functions, but also timer recording functions, a variable speed video reproducing function and so forth. The performance of such a great number of functions or operations involves relatively complicated key operations on the part of the user.

On the other hand, in recent years, remote control commanders for remotely controlling apparatuses, such as VTRs, have become a popular convenience for users. The remote control commander has been required to have the capability of controlling most of the functions that can be performed by the apparatus. Therefore, the arrangement of an operation key array on the remote control commander has become more and more complicated and it is difficult for the user accurately to operate the commander in order to obtain the desired function.

In order to simplify the key arrangement, non prepublished European Patent Application Publication No. EP-A-0 188 162 proposes a VTR with a multi-function rotary dial device. The multi-function rotary dial device performs a timer setting operation, a channel selecting operation, reproduction speed control operation and so forth. This significantly simplifies the key arrangement of the operation key array on the VTR. Furthermore, such a multi-function rotary dial allows reproduction of a video image at various speeds such as still mode, half speed, double speed and so forth.

US Patent No. US-A-4 045 777 discloses a multi-function remote control device for use with a television receiver. A thumbwheel-operated control is provided for proportional adjustment of selected functions, such as sound volume and colour settings.

According to the invention there is provided a system for remotely controlling a video signal reproducing apparatus, the system comprising:
a controller provided in the apparatus for controlling operation of the apparatus and selecting operational modes for accomplishing different functions according to a control command; and
a remote control commander including push button switch means for selecting operational modes of the apparatus to cause production of a remote control signal carrying said control command to the apparatus, and a first rotary dial assembly operable to produce signals indicative of rotation thereof so as to generate said control command;
characterised in that:
a second rotary dial assembly is provided in the apparatus, the second rotary dial assembly also being operable to produce signals indicative of rotation thereof so as to generate said control command; and
the controller is operable to control the speed of reproduction of the video signal by the apparatus to one of a plurality of different speeds in response to said control command from either of the first and second rotary dial assemblies.

The commander may include a signal processing circuit associated with a detector monitoring the angular position of the rotary dial. The signal processing circuit processes the detector signal from the detector to produce a direction indicative signal indicative of the direction towards which angular displacement of the rotary dial is taking place, and a velocity indicative signal indicative of the velocity of angular displacement of the rotary dial.

A preferred embodiment of the invention described in detail hereinbelow simplifies the operation key array on a remote control commander for remotely controlling an apparatus, for example a VTR, by employing a multi-function rotary dial assembly including a dial and an independently-rotatable ring. The use of such a rotary dial assembly can enable an increase in the number of remote-controllable functions that can be performed by the commander. For example, the ring may be used as a shuttle control performing selected forward and reverse playback at a variable speed.

The invention will now be further described, by way of illustrative and non-limiting example, with reference to the accompanying drawings, in which:
Figure 1 is a perspective view of a VTR deck and of a remote control commander according to a preferred embodiment of the present invention;
Figure 2 is a front elevation of the VTR deck of Figure 1;
Figure 3 is an enlarged perspective view of part of the VTR deck of Figure 1;
Figure 4 is an enlarged perspective view of another part of the VTR deck of Figure 1;
Figure 5 is an enlarged front elevation of a display on a front panel of the VTR deck of Figure 1;
Figure 6 is an enlarged and exploded perspective view of a rotary dial assembly;
Figure 7 is a cross-section through the assembled rotary dial assembly;
Figure 8 is a diagram representing the interaction between a shuttle ring and a rotary disc in the rotary dial assembly;
Figure 9 is a diagram of a click mechanism of the rotary dial assembly of Figure 6;
Figure 10 is a plan view of a reflector plate which comprises a plurality of reflecting segments and a plurality of non-reflecting segments arranged alternately around the periphery of the reflector plate;
Figure 11 is a plan view of another reflector plate which comprises a plurality of reflecting segments and a plurality of non-reflecting segments arranged alternately around the periphery of the reflector plate;
Figure 12 is a circuit diagram showing how photosensors employed in the rotary dial assembly are connected;
Figure 13 is a block diagram of the circuitry of the VTR and the remote control commander of Figure 1;
Figure 14 is a flow chart of an input control program to be executed by a preferred form of implementation of the rotary dial assembly;
Figure 15 and 16 show relationships between outputs of optical sensors for indicating the direction of rotation of a rotary dial disc of the preferred form of implementation of the rotary dial assembly;
Figure 17 is a diagram showing variation of pulse duration according to the speed of rotation of the rotary dial disc;
Figure 18 shows the display when serving as a tape indicator, a TV-channel indicator and a clock indicator;
Figure 19 shows the display in a TIMER SET MODE;
Figure 20 shows relationships among outputs of three optical sensors for distinguishing JOG MODE operation from SHUTTLE MODE operation;
Figure 21 shows the waveform of an encoded signal transmitted from the remote control commander;
Figure 22 is a chart showing the relationship between the angular position of the rotary dial disc and the encoded signal transmitted from the remote control commander;
Figure 23 is a flow chart for an editing program to be executed in the remote control commander for controlling editing operations of a VTR; and
Figure 24 is a flow chart of a control program to be executed by the remote control commander for timer setting, channel selection and variable speed reproduction.

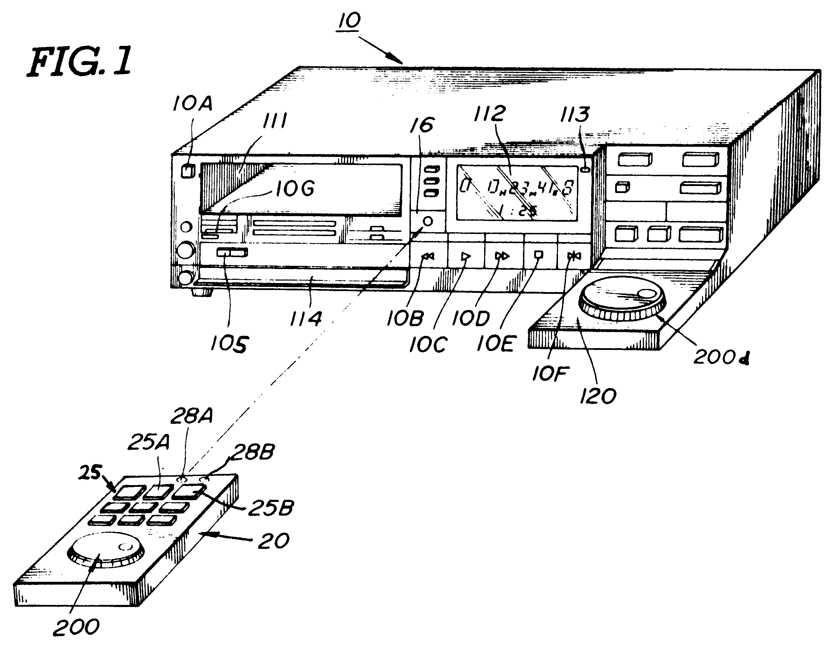

Referring now to the drawings, particularly to Figures 1 to 5, a remote control commander 20 in accordance with a preferred embodiment of the invention is provided with a rotary dial assembly 200 for remotely controlling a VTR deck 10 which is provided with a rotary dial assembly 200d of identical construction to that of the remote control commander.

It should be appreciated that although the remote control commander 20 in accordance with the preferred embodiment of the present invention will be described hereinbelow in terms of remotely controlling a VTR, the commander can control various other items of video signal reproducing equipment, such as a character information system accessible through a telephone line, (such as so-called videotex systems, for instance the PRESTEL system (UK) or the CAPTAIN system (Japan)) and so forth.

The VTR deck 10 has a front panel 110 with a cassette insert opening 111 through which a VTR tape cassette may be inserted. The cassette insert opening 111 establishes communication between the exterior of the VTR deck 10 and a cassette compartment within the deck and is normally closed or covered by a lid. An eject buttom 10G is provided near the opening 111. The eject button 10G is associated with a cassette eject mechanism (not shown) in a manner well-known per se.

A power switch button 10A and mode selector buttons, for example a rewinding button 10B, a playback button 10C, a fast-forward buttom 10D, a stop button 10E and a pause button 10F are provided on the front panel 110. The mode selector buttons are associated with a VTR system housed in the VTR deck 10 in a manner well-known per se. The buttons 10A to 10F all serve to operate respective associated switches.

A display 112 on the front panel 110 lies side-by-side with the cassette insert opening 111. The display 112 serves as a clock for displaying the time, and as a real-time counter for displaying recording time and/or playback time. The display 112 may also serve as a mode indicator for indicating the current operational mode of the VTR system, or as a channel indicator for a TV tuner which is incorporated within the VTR system in a manner well-known per se. The display 112 may also serve as a time-activated recording indicator which may be set to turn on when time-activated recording is ordered.

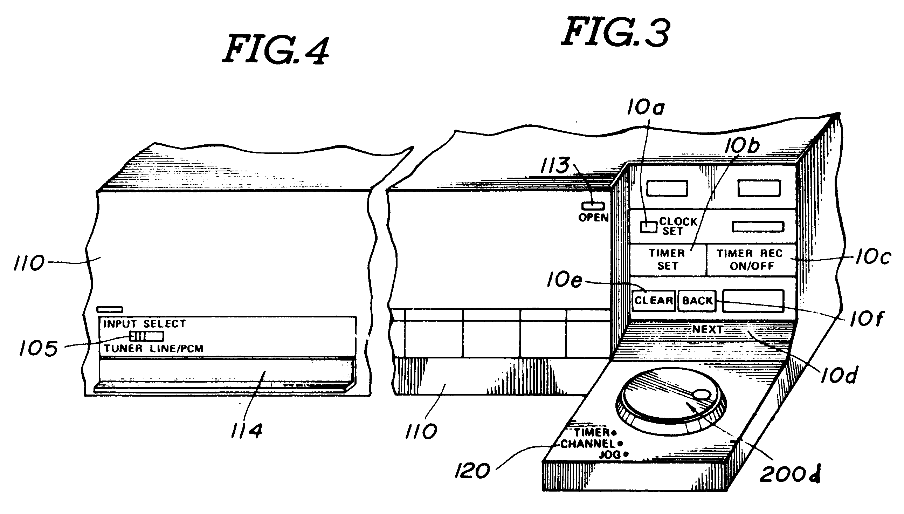

The front panel 110 also has a record button (not shown) for operating a record switch for selecting a recording mode. An input selector switch 105 (shown in Figure 4) is provided on the front panel 110 below the cassette insert opening 111. The input selector switch 105 is normally hidden by a lid 114. The input selector switch 105 switches the video signal source between a TV tuner and other sources, such as other VTR systems, PCM signal reproducing apparatus and so forth.

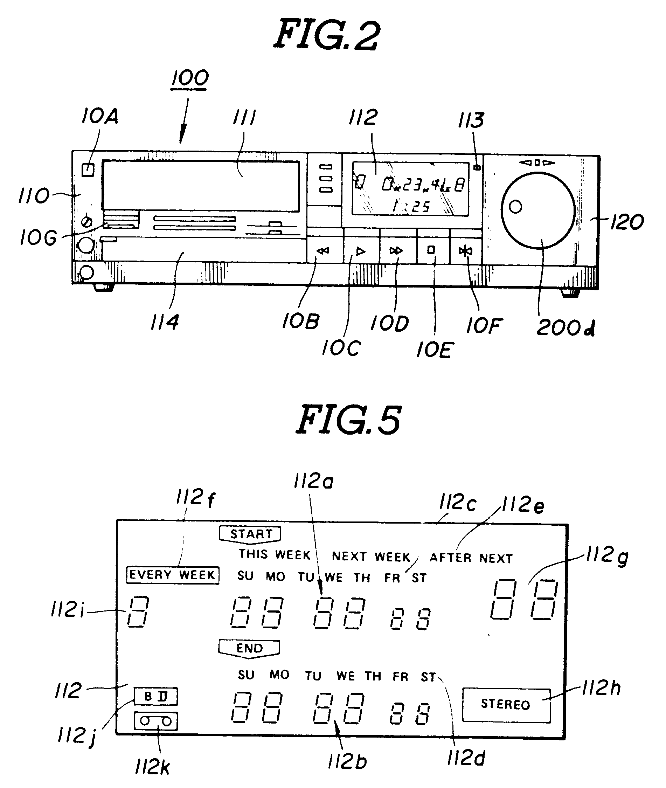

The rotary dial assembly of the VTR deck 10 is mounted on a sub-panel 120 installed on the front panel 110 on the side of the display 112 opposite to the cassette insert opening 111. In the illustrated embodiment, the rotary dial assembly 200d is designed to allow timer setting, manual scanning and playback speed selection, Also, the rotary dial assembly 200d may serve as a TV-channel selector while the TV tuner in the VTR system is active. The lower edge of the sub-panel 120 is pivotally connected to the front panel 110 and the sub-panel 120 is movable between a vertical position, in which the front surface of the sub-panel 120 lies flush with the front surface of the front panel 110 as shown in Figure 2, and a horizontal position, in which the sub-panel 120 extends horizontally outwardly from the front panel 110 as shown in Figures 1 and 3. The sub-panel 120 is normally in the vertical position and latched or locked in that position by means of an appropriate locking mechanism. In order to unlock the locking mechanism and allow the sub-panel 120 to move to the horizontal position, a release push button 113 (hereinafter also referred to as "the sub-panel open button") is provided on the front panel 110 adjacent the sub-panel 120. Timer set operation buttons are disposed on the portion of the front panel 110 normally concealed by the sub-panel 120. The timer set operation buttons comprise a clock set button 10a, a timer set mode selector button 10b, a timer recording ON/OFF button 10c, a next item selector button 10d, a clear button 10e and an item-back button 10f. The functions of the timer set operation buttons are described in detail hereinbelow.

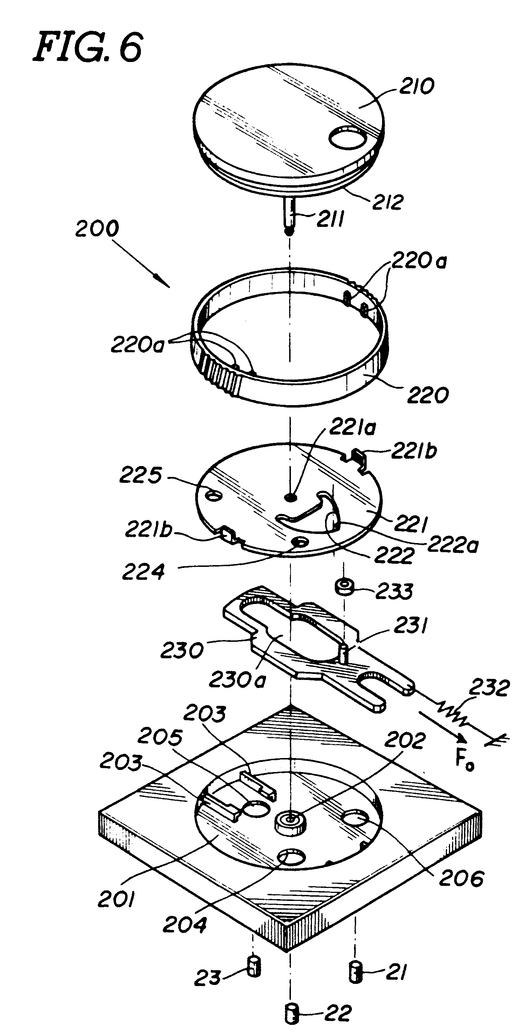

As will be apparent from Figures 1 to 5, the rotary dial assembly 200d is accessible in both the vertical and horizontal positions of the sub-panel 120. The rotary dial assembly 200d has a shuttle ring 220 (see Figures 6 et seq). In the vertical position, in the pause mode, rotation of the rotary dial assembly 200d allows the user to scan in forward and backward directions through the tape at a speed proportional to the speed of rotation of the rotary dial assembly: this action is hereinafter referred to as "manual scan". While in the horizontal position, the rotary dial assembly 200d can be rotated to adjust the timer setting for timer-activated recording; and the shuttle ring 220 can be rotated to select a playback speed of the tape. In the preferred embodiment, the playback speed may be adjusted by means of the shuttle ring 220, and is variable in five graduated increments of one-fifth, one half, normal speed, etc. The detailed construction and operation of the rotary dial assembly 200 are described hereinbelow.

The VTR deck 10 described above is coupled with the remote control commander 20. The remote control commander 20 is generally of a compact size suitable for hand carrying. The commander 20 generally transmits a control command towards a control command receiver 16 provided on the front panel 110. In practice, the control command is in the form of an infra-red light beam encoded with control command data. As shown in Figure 1, the commander 20 is provided with a push button array 25 including a plurality of push buttons 25A, 25B... for manually selecting the operational mode of the VTR. As mentioned above, the commander 20 is also provided with a rotary dial assembly 200 of identical construction to that provided in the VTR deck 10. In similar manner to that provided in the VTR deck 10, the rotary dial assembly 200 on the commander 20 allows manual scanning, variable speed tape playback speed, channel selection, and timer setting, as is described hereinbelow in greater detail. By utilising the push button array 25 and the rotary dial assembly 200, the VTR may be operated in various operational modes.

The remote control commander 20 also has indicators which, in practice, comprise a plurality of luminous elements 28A, 28B..., such as luminous (light emitting) diodes, for indicating operation of the commander.

As set forth above, the rotary dial assembly 200 of the remote control commander 20 serves for timer setting, TV channel section, and variable mode reproduction, functions similar to those that can be performed by the rotary dial assembly 200d of the VTR deck 10. In order to select the operational mode of the rotary dial assembly 200, the remote control commander 20 has mode selector switches. In the illustrated embodiment, the push button 25A serves as a selector switch for the variable speed reproduction mode, which will hereinafter be referred to as 'the JOG/SHUTTLE mode'. On the other hand, the push button 25B serves as a TIMER/CHANNEL mode selector switch. The JOG/SHUTTLE selector switch 25A is operable between an ON position and an OFF position by manual depression. In the ON position, the operational mode of the remote control commander is set to the JOG/SHUTTLE mode for reproducing the VTR signal at a variable speed. The TIMER/CHANNEL mode selector switch 25B is operable between a TIMER SET mode position and a CHANNEL mode position. When the JOG/SHUTTLE mode selector switch 25A is in the OFF position, the commander 20 operates in the TIMER/CHANNEL mode. The TIMER/CHANNEL mode selector switch 25B is normally set at the CHANNEL mode position for allowing TV channel selection. The TIMER SET mode is selected by manual operation of the TIMER/CHANNEL mode selector switch 25B. When the JOG/SHUTTLE mode selector switch 25A is depressed to put the switch in the ON position, the TIMER/CHANNEL mode operation is disabled and JOG/SHUTTLE mode operation is enabled allowing adjustment of the speed of reproduction by operation of the rotary dial assembly 200.

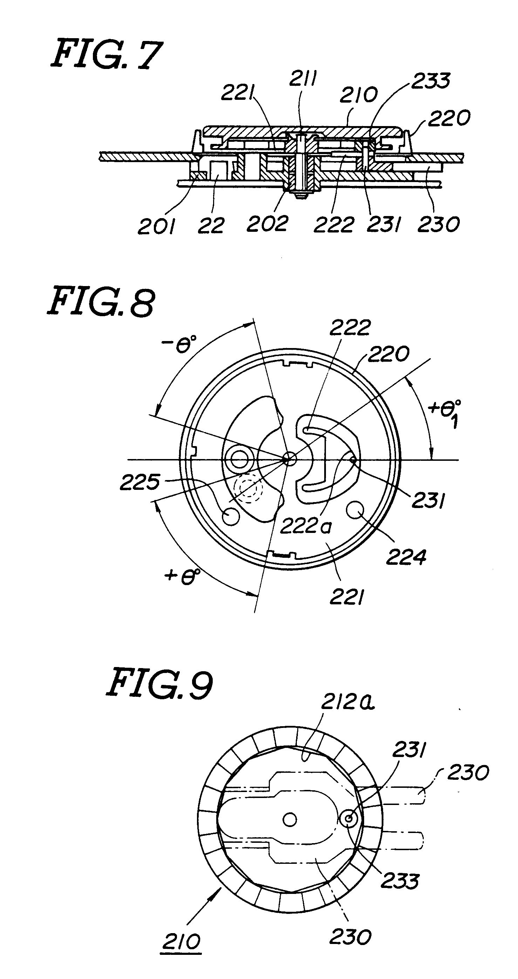

As shown in Figures 6 and 7, the rotary dial assembly 200 is rotatably mounted on a base 201. The base 201 defines a rest for receiving a rotary dial disc 210 and other equipment forming part of the rotary dial assembly 200 and the shuttle ring 220. The base 201 is circular in plan view and has a central bearing boss 202 which rotatably receives a rotary shaft 211 formed on the dial disc 210. The rotary shaft 211 is fixed to the dial disc 210 for rotation therewith and extends through a central opening 221a formed through a rotary disc 221. The rotary disc 221 is rotatable about the rotary shaft 211 and has a generally heart-shaped cam hole 222. The cam hole 222 cooperates with an actuation pin 231 extending from a slide lever 230. The slide lever 230 has an elongate hole 230a through which the rotary shaft 211 passes. The elongate hole 230a extends along the longitudinal axis of the slide lever 230 and has a transverse width greater than the diameter of the bearing boss 202 so as to allow sliding movement across the base 201.

The base 201 has three holes 204, 205 and 206 for receiving optical sensors (photosensors) 21, 22 and 23, respectively. The optical sensors 21, 22 and 23 monitor angular displacement of the dial disc 210 and the shuttle ring 220, the operation of which will be described later.

The slide lever 230 has a section 230b that slidably engages with a pair of guides 203 formed on the base 201. The guides 203 on the base 201 serve as retainers for the slide lever 230 and guide movement of the slide lever along its longitudinal axis. The slide lever 230 is biased by means of a bias spring 232 along its longitudinal axis in a direction towards the spring 232. The biasing force Fₒ exerted on the slide lever 230 by the bias spring 232 urges the actuation pin 231 into a section 222a of the cam hole 222.

The rotary disc 221 has a pair of tabs 221b extending vertically from its periphery. The shuttle ring 220 has pairs of extensions 220a engaging the strips 221b for rotation with the rotary disc 221.

The slide lever 230 cooperates with the shuttle ring 220 in such a manner that, when the shuttle ring 220 is rotated from a predetermined initial angular position (neutral position), in which the pin 231 is located in the section 222a, through an angle +ϑ₁ as shown in Figure 8, the pin 231 is positioned in the cam hole 222. At this position, a component of the rotational torque applied to the shuttle ring 220 balances the spring force of the bias spring 232. Upon releasing the rotational torque applied to the shuttle ring 220, the pin 231 is returned to the section 222a of the cam hole 222 by the spring force of the bias spring 232. Accordingly, the rotary disc 221 is rotated through the corresponding angle +ϑ₁ and returned to the predetermined initial angular position (neutral position) in response to release of the rotational torque on the shuttle ring 220.

The rotary disc 221 is formed with through openings 224 and 225 which are located so as to be aligned with the holes 204 and 205 of the base 201 when the rotary disc is in the initial angular position.

The dial disc 210 has an annular extension 212 extending from its periphery towards the base 201. The inner periphery 212a (Figure 9) of the annular extension 212 is polygonal, for example a dodecagon. The inner periphery 212a acts as a cam surface along which a cam roller 233 mounted on the pin 231 tracks. The cam roller 233 is resiliently biased towards the cam surface 212a by the spring force of the bias spring 232. This resilient contact between the cam roller 233 and the cam surface 212a serves to provide a detentive action for rotation of the dial disc 210. In other words, the cam roller 233 and the cam surface 212a act as a click mechanism providing a detent action at every given angle of displacement of the dial disc 210, which given angle may correspond to one frame of a video signal.

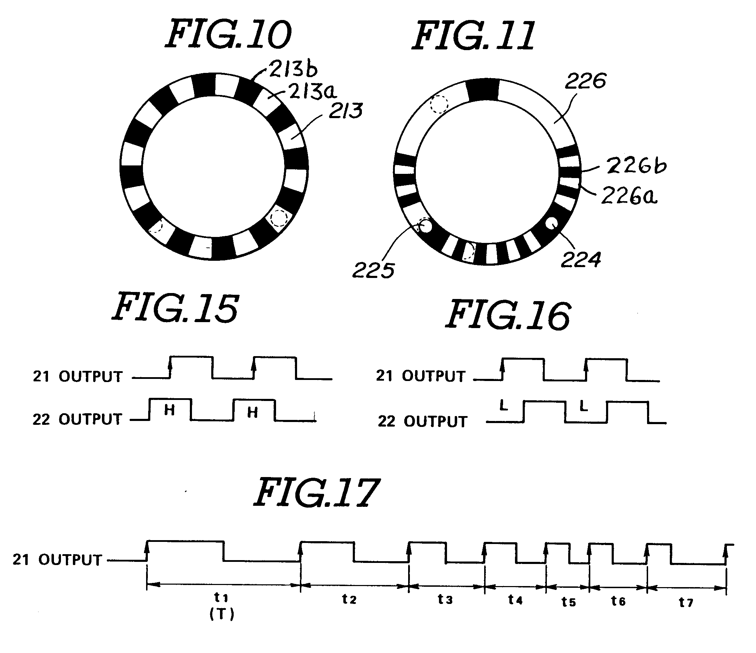

An annular reflector sheet or plate 213 (Figure 10) is adhered to a surface of the dial disc 210 opposing the optical sensors 21, 22 and 23. The surface of the reflector plate 213 opposing the optical sensors 21, 22 and 23 comprises a plurality of reflecting segments 213a and a plurality of non-reflecting segments 213b. The reflecting segments 213a and the non-reflecting segments 213b alternate around the periphery of the reflector plate 213. In the preferred embodiment, the reflecting and non-reflecting segments 213a and 213b are of identical shape and each of them occupies 1/24 of the circumference of the reflector plate 213.

Similarly, an annular reflector sheet or plate 226 (Figure 11) is adhered to a surface of the rotary disc 221 opposing the optical sensors 21, 22 and 23. The surface of the reflector plate 226 opposing the optical sensors 21, 22 and 23 comprises a plurality of reflecting segments 226a and a plurality of non-reflecting segments 226b. The reflecting segments 226a and the non-reflecting segments 226b alternate around the periphery of the reflector plate 226.

Each of the optical sensors 21, 22 and 23 comprises a photo-interrupter having a light emitting diode and a photo-transistor. The optical sensors 21 and 22 monitor angular variation of the dial disc 210 and produce first and second sensor signals which have signal phases offset from one another by 90°. The optical sensor 23 monitors angular variation of the rotary disc 221 and thus monitors angular variation of the shuttle ring 220.

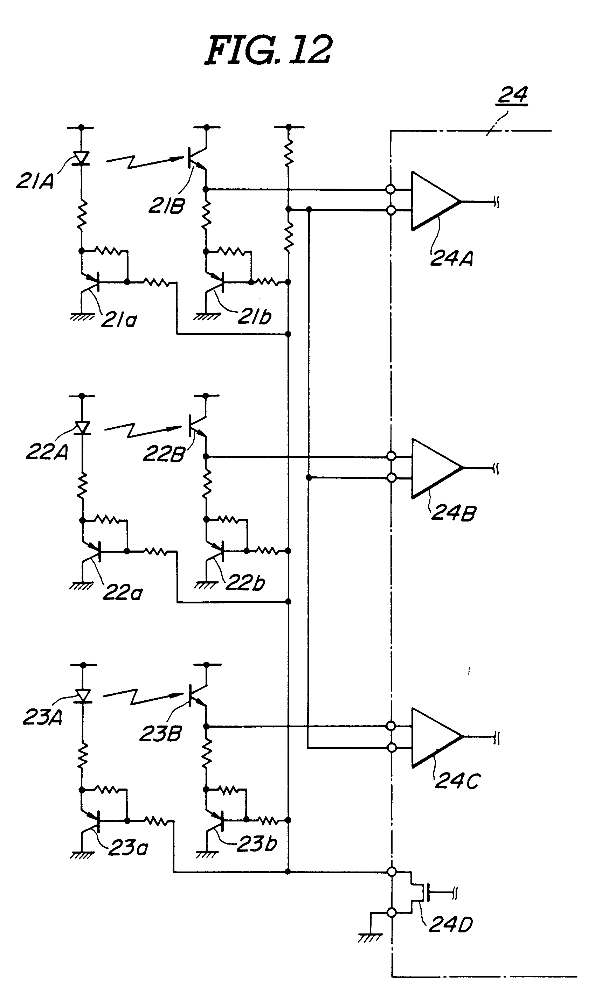

As shown in Figure 12, the optical sensors (photosensors) 21, 22 and 23 comprise light emitting (luminous) diodes 21A, 22A, 23A and photo-transistors 21B, 22B and 23B. The light emitting diode 21A and the photo-transistor 21B forming the optical sensor 21 are earthed (grounded) through respective transistors 21a and 21b. The emitter of the photo-transistor 21B is connected to one input terminal of an input comparator 24A of a dial encoder (dial-encoding microcomputer or microprocessor) 24. Similarly, the light emitting diode 22A and the photo-transistor 22B forming the optical sensor 22 are connected to earth (ground) via respective transistors 22a and 22b. The emitter of the photo-transistor 22B is connected to one input terminal of an input comparator 24B of the dial encoder 24. Further, and similarly, the light emitting diode 23A and the photo-transistor 23B forming the optical sensor 23 are connected to earth (ground) via respective transistors 23a and 23b. The emitter of the photo-transistor 23B is connected to one input terminal of an input comparator 24C of the dial encoder 24.

The bases of the transistors 21a, 21b, 22a, 22b, 23a and 23b are connected to an open-drain output port 24D of the dial encoder 24 and to a power source terminal (not shown). Preferably, dividing resistors are inserted between the power source terminal and the bases of the transistors 21a, 21b, 22a, 22b, 23a and 23b.

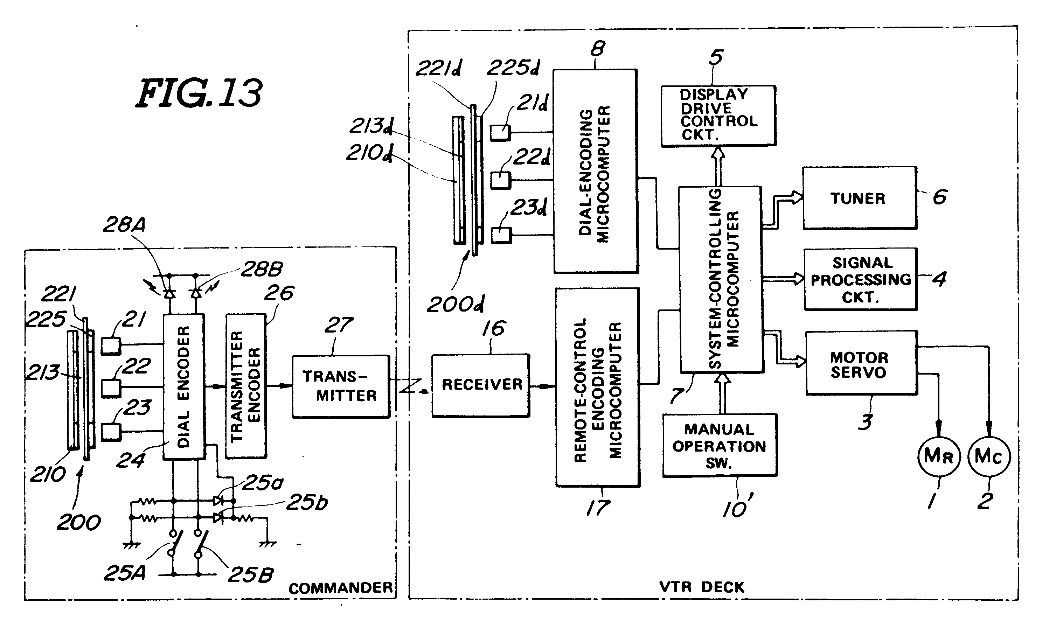

As shown in Figure 13, the optical sensors 21d, 22d and 23d of the rotary dial assembly 200d of the VTR deck 10 are connected to a dial-encoding microprocessor (microcomputer) 8. The dial-encoding microprocessor 8 is associated with a system-controlling microcomputer (microprocessor) 7. The system-controlling microcomputer 7 is connected to a display drive control circuit 5, a tuner circuit 6, a signal processing circuit 4 and a motor servo circuit 3 which is, in turn, connected to a reel motor (M_{R}) 1 and a capstan motor (M_{C}) 2. The system-controlling microcomputer 7 is also connected to manual operation switches 10', including switches operated by the power switch button 10A, the rewinding button 10B, the playback button 10C, the fast-forward button 10D, the stop button 10E, the pause button 10F, the clock set button 10a, the timer set mode selector button 10b, the timer recording ON/OFF button 10c, the next item selector button 10d, the clear button 10e and the item-back button 10f.

It should be appreciated that, although the illustrated embodiment employs dial-encoding to apply outputs from the optical sensors 21d, 22d and 23d to a controlling arrangement, it would be possible to employ a waveform-shaping circuit or circuits for producing rectangular wave pulses based on the optical sensor outputs as a replacement for the dial-encoding microprocessor 8.

The system-controlling microcomputer 7 controls the signal processing circuit 4 which processes video signals and audio signals in a manner well-known per se in accordance with the desired recording and reproducing mode selected by means of the manual operation switches 10'. The system-controlling microcomputer 7 also controls the tuner circuit 6 which selects a TV channel in a manner well-known per se for recording of a desired TV programme or for sending video and audio signals to a TV monitor for direct reproduction. The motor servo circuit 3 is controlled by the system-controlling microcomputer 7 to drive the reel motor 1, the capstan motor 2 and so forth. The motor servo circuit 3 may also control a servo system for a VTR cassette loading system, ejection system and a rotary head drive.

The display drive control circuit 5 is connected to the system-controlling microcomputer 7 for controlling the display 112. As shown in detail in Figure 5, the display 112 includes a column or portion 112a serving as a real-time counter, a column or portion 112b serving as a clock counter, columns or portions 112c and 112d for calendar displays, a column or portion 112e for designation of a week or weeks in which to perform timer-activated recording, which may display "THIS WEEK", "NEXT WEEK", "AFTER NEXT" in the case of a VTR which allows timer-activated recording over a three-week period, a column or portion 112f for indicating designation of timer-activated recording "EVERY WEEK" at a set time and day of the week and for a designated TV channel, a column or portion 112g for indication of a selected TV channel, a column or portion 112h for indication of stereo reproduction, and a column or portion 112i for indication of index scan. The columns 112b and 112d are associated with each other to display the day of the week and clock time during all normal operations of the VTR system except for the TIMER SET MODE. The display 112 may also include a column or portion 112j for indication of a recording tape type, e.g. I, II, III. Also, the display 112 may have a column or portion 112k for indiction the presence or absence of a VTR tape cassette. In the TIMER SET MODE, the column or portion 112a cooperates with the column or portion 112c to serve as an indicator for the start time of timer-activated recording. Similarly, the column or portion 112b cooperates with the column or portion 112d to serve as an indicator for a recording end time when setting the timer.

The optical sensors 21, 22 and 23 of the rotary dial assembly 200 in the remote control commander 20 are connected to the dial encoder (dial-encoding microprocessor or microcomputer) 24 in the commander. The dial encoder 24 is also connected to the push buttons 25A, 25B... of the push button array 25 of the commander 20. The dial encoder 24 is further connected to the indicators of the commander 20 (that is the luminous elements 28A, 28B...) for controlling illumination thereof for indicating the operating condition of the commander. The dial encoder 24 produces an encoded signal for commanding operation of the VTR according to manual operation of the push button array 25 and the rotary dial assembly 200. An encoded signal of the dial encoder 24 is fed to a transmitter encoder 26 which is connected to an infra-red light beam transmitter 27. The transmitter encoder 26 thus processes the encoded signal from the dial encoder 24 to form a control command, by which an infra-red light beam emitted from the transmitter 27 is modulated. The infra-red light beam modulated by the control command is hereafter referred to as 'the command beam'. The command beam emitted by the transmitter 27 is received by the receiver 16 of the VTR deck 10. The receiver 16 feeds the received command beam to a remote-control encoding microcomputer 17. The remote-control encoding microcomputer 17 demodulates the command beam to extract the control command therefrom and feeds the control command to the system-controlling microcomputer 7. The system controlling microcomputer 7 then becomes active to operate the VTR deck 10 in the operational mode commanded by the control command received from the remote control commander 20.

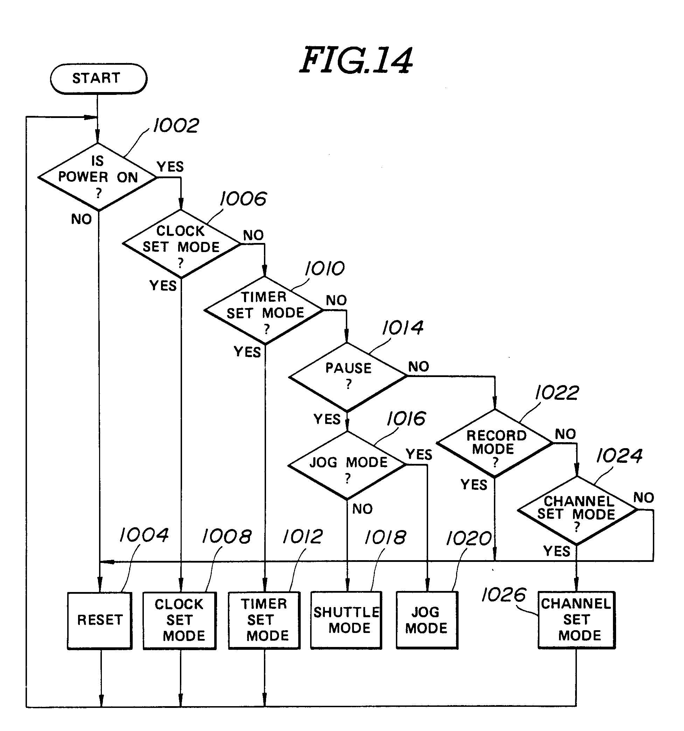

As set out above, the rotary dial assembly 200 performs three functions, namely timer setting, manual scanning and adjustment of playback speed. In addition, the rotary dial assembly 200d allows TV channel selection while the TV tuner in the VTR system is active. In order selectively to perform the desired mode of operation through the rotary dial assembly 200d of the VTR deck 10, a program shown in Figure 14 is executed by the system-controlling microcomputer 7. As will be appreciated from Figure 14, the illustrated control program is executed cyclically at a given preselected timing even if the main power switch of the VTR deck 10 is OFF.

First, at a step 1002, the main power switch is checked to see whether or not it is in the ON position. If the main power switch is OFF, the system controlling microcomputer 7 is reset at a step 1004 and then control returns to the step 1002.

On the other hand, if the main power switch is ON when checked at the step 1002, the clock set switch (operated by the button 10a) is then checked at a step 1006. If the clock set switch (operated by the button 10a) has been set to the ON position, the microcomputer 7 allows setting of the clock by rotational manipulation of the rotary dial assembly 200d. In other words, at a step 1008, a CLOCK SET MODE is performed. On the other hand, if the clock set switch (operated by the button 10a) is OFF, then the timer set switch (operated by the timer set mode selector button 10b) is checked at a step 1010. If the timer set switch has been set to the ON position, the microcomputer 7 allows the timer to be set by rotational manipulation of the rotary dial assembly 200d. In other words, at a step 1012, the TIMER SET MODE is performed. On the other hand, if the timer set switch (operated by the button 10b) is OFF, then the playback switch (operated by the button 10C) and the pause switch (operated by the button 10F) are checked at a step 1014. If both the playback switch (the button 10C) and the pause switch (the button 10F) are ON, which means that the VTR deck 10 is in a playback-pause condition, then the output of the optical sensor 23d is checked at a step 1016 to see whether or not the shuttle ring 220d is being rotated. If so, the process goes to a step 1018 to perform a SHUTTLE MODE. Otherwise, the process goes to a step 1020 to perform a JOG MODE.

On the other hand, if the playback-pause condition is not detected when checked at the step 1014, then the record button switch (not shown) is checked at a step 1022. If the record button switch is ON and thus selection of RECORD MODE operation of the VTR deck 10 is detected, the microcomputer 7 is reset at the step 1004 and control returns to the step 1002. Otherwise, the input selector switch 105 is checked at a step 1024. If the TV tuner has been selected by means of the input selector switch 105, then a CHANNEL SET MODE is performed at a step 1026. If the input selector switch 105 is in a LINE/PCM MODE position, then control passes to the step 1004.

The operation of the rotary dial assembly 200d in the CLOCK SET MODE, TIMER SET MODE, SHUTTLE MODE, JOG MODE and CHANNEL SET MODE will now be described.

### CLOCK SET MODE OPERATION (Step 1008)

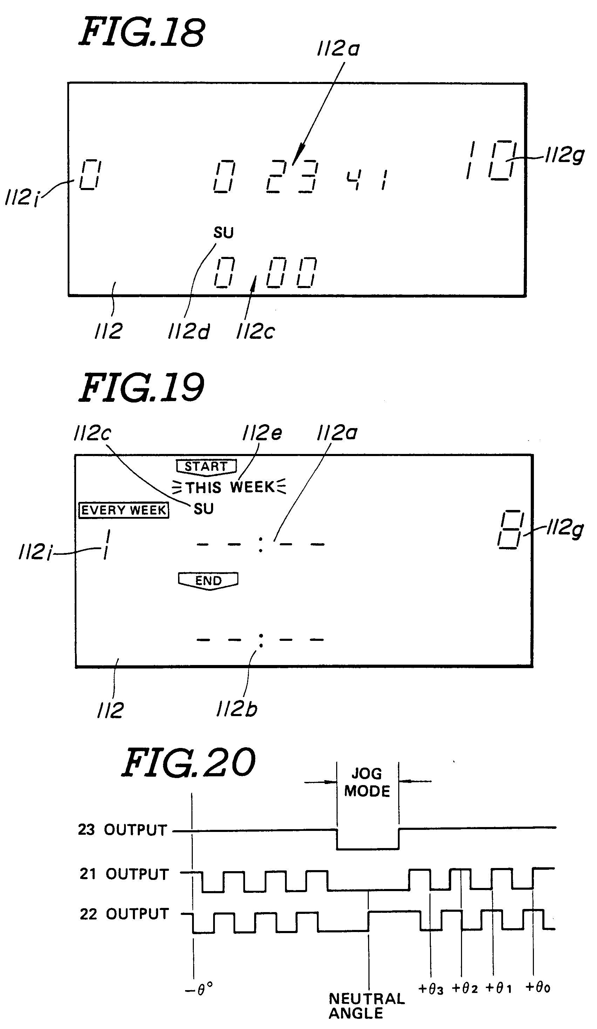

As shown in Figures 5 and 18, the clock time is displayed in the display columns or portions 112b and 112d. When it becomes necessary to set the clock, a power cord is first plugged into an outlet, for example a wall outlet, whereupon a predetermined clock time, for instance "SU" and "AM 12:00" (which means 12:00 AM, Sunday) is displayed on the display 112. In order to set the clock to the current clock time, the release pushbutton 113 is depressed to move the rotary dial assembly 200d to its horizontal position and then the clock set button 10a is depressed to enter the CLOCK SET MODE.

After first depressing the clock set button 10a, the day of the week indicator in the display column or portion 112d starts blinking. The rotary dial disc 210d can then be manually rotated to select the day of the week. In this case, if the dial disc 210d is rotated clockwise, a weekday indicator is advanced; for example, the SU symbol may stop blinking while a MO (Monday) symbol starts blinking. On the other hand, if the dial disc 210d is rotated anticlockwise, the direction of advance is reversed. After the correct day of the week is selected, the next item selector button 10d is depressed. Then, the day indicator stops blinking and an hour indicator in the display column or portion 112b starts to blink. The dial disc 210d can again be rotated either clockwise or anticlockwise to adjust the currently selected hour symbol together with an indication of AM/PM. After the correct hour and correct AM/PM have been selected, the next item selector button 10d is again depressed. As a result, the hour indicator stops blinking and a minutes symbol in the column or portion 112b starts blinking. The dial disc 210d can then be rotated clockwise or anticlockwise to select the minutes symbol which correctly indicates the current time. By depressing the next item selector button 10d again, the CLOCK SET MODE is ended and then the set clock time is indicated on the columns or portions 112b and 112d of the display 112.

Since, as mentioned above, the output phases of the optical sensors 21d and 22d differ by 90°,the direction of rotation of the dial disc 210d can be sensed by checking the signal phase of the optical sensor 22d at the leading edge of each HIGH-level output from the optical sensor 21d. In the preferred embodiment, the optical sensors 21d and 22d are arranged in such a manner that, when the dial disc 210d is rotated clockwise, the signal phase of the output of the optical sensor 22d will be HIGH at the leading edge of a HIGH-level pulse from the optical sensor 21d, as shown in Figure 15, and when the dial disc 210d is rotated anticlockwise, the signal level of the output of the optical sensor 22d will be LOW at the leading edge of a HIGH-level pulse from the optical sensor 21d, as shown in Figure 16. Therefore, the system-controlling microcomputer 7 is able to distinguish between the opposite directions of rotation of the dial disc 210d by detecting the signal phase of the optical sensor 22d at the time that the output of the optical sensor 21d rises. The system-controlling microcomputer 7 also detects the speed of rotation of the dial disc 210d according to the pulse width of, for instance, the output of the optical sensor 21d, for example different pulse widths represented at t1, t2, t3, t4, t5, t6 and t7 in Figure 17. The system-controlling microcomputer 7 compares the detected speed of rotation of the dial disc 210d with a predetermined threshold and appropriately adjusts the rate of change of the numbers displayed on the display 112. For example, in order to adjust the minutes value of the clock time, if the dial disc 210d is rotated at a relatively low speed the minutes value will change by "1" with every given angle of dial rotation, whereas if the dial disc 210d is rotated at a relatively high speed the minutes value will change by more than "1", (for example by "2") with every given angle of dial rotation. This reduces the required angular change needed to reach the desired number. This is convenient when a relatively large adjustment is required. In addition, since the rate of change can be adjusted automatically according to the speed of rotation of the dial disc 210d, fine adjustment of the number is possible by slowing down the speed of rotation after coarse adjustment by way of high speed rotation of the dial disc.

### TIMER SET MODE (Step 1012)

As is well known, the TIMER SET MODE is employed in VTRs to set up timer-activated recording, that is to set the recording start time, recording end time, day of the week, TV channel to be recorded and so forth. To set the time, the release pushbutton 113 first is depressed, as in the clock setting operation, to move the rotary dial assembly 200d to its horizontal position. Thereafter, the timer set mode selector button 10b is depressed to enter the TIMER SET MODE.

It should be appreciated that, in the TIMER SET MODE, the columns or portions 112a and 112c of the display 112 serve as a recording start time indicator and the columns 112b and 112d serve as a recording end time indicator.

After the timer set mode selector button 10b has been depressed, the system-controlling microcomputer 7 enters the TIMER SET MODE. In response to this, the display column or portion 112e indicative of the desired week at which timer-activated recording is ordered starts blinking as shown in Figure 19. Specifically, one of the symbols "THIS WEEK", "NEXT WEEK", "AFTER NEXT" and "EVERY WEEK" starts blinking. The rotary dial disc 210d is then manually rotated to select the desired week. After the desired week is selected, the next item selector button 10d is depressed. The week indicator then stops blinking and the display column or portion 112d indicating the day of the week starts blinking as in the CLOCK SET MODE. The day of the week and the recording start time can be selected in basically the same manner as when setting the clock as explained above.

After setting the recording start time, in response to depression of the next item selector button 10d, the hour symbol in the display column or portion 112b starts blinking. As in the CLOCK SET MODE, the hour symbol and minutes symbol in the column or portion 112b may be selected to set the recording end time. Upon depressing the next item selector button 10d after setting the minutes value in the display column or portion 112b, a TV channel symbol in the display column or portion 112g starts blinking. By rotating the dial disc 210d, the number displayed in the column 112g is advanced or retarded according to the direction and magnitude of rotation of the dial disc 210d. As described previously, the rate of change of the number is adjusted depending upon the speed of rotation of the dial disc 210d. When the number of the desired TV channel is obtained on the column or portion 112g, the next item selector button 10d is depressed. The TIMER SET MODE then ends.

In order to perform timer-activated recording, the timer recording ON/OFF button 10c is depressed subsequent to selection of the recording start time, recording end time and TV channel to be recorded in the TIMER SET MODE. The system-controlling microcomputer 7 then enters a timer-activated recording mode. As in VTR systems now on the market, upon entry into the timer-activated recording mode the main power switch is automatically turned OFF and the VTR system will not accept entry of inputs through manual switches except for the timer recording ON/OFF switch operated by the button 10c and another switch (not shown) used to confirm the timer setting. The timer record ON/OFF switch operated by the button 10c then serves as a cancel switch allowing the user to cancel timer-activated recording.

### SHUTTLE MODE (Step 1010)

The SHUTTLE MODE can be selected in the playback-pause condition (which can, for example, be selected by activation of the push button array 25 on the commander 20) to cause the VTR tape to be played back at one of five preset tape speeds ranging from one fifth of normal speed to four times normal speed. In the playback-pause condition, the picture on the TV monitor is frozen. By grasping and rotating the shuttle ring 220d in this condition, picture search or scanning can be performed at a speed which varies in dependence upon the angular offset of the shuttle ring 220d. Also, according to the direction of rotation of the shuttle ring 220d, forward scanning or reverse scanning can be performed selectively. According to the preferred embodiment, by rotating or turning the shuttle ring 220d clockwise, forward scanning can be performed. On the other hand, by turning the shuttle ring 220d anticlockwise, reverse scanning can be performed.

The shuttle ring 220d can be turned or rotated clockwise and anticlockwise through respective given angles. According to the angular position of the rotary disc 221d, which is rotated with the shuttle ring 220d, forward and reverse variable-speed picture searching can be performed as set forth above. Also, relatively high-speed scanning (which is referred to as CUE REV) can be performed by rotating the shuttle ring 220d to its limit.

The dial-encoding microprocessor (microcomputer) 8 distinguishes between the JOG MODE and SHUTTLE MODE according to the angular position of the rotary disc 221d. Outputs of the optical sensors 21d, 22d and 23d are related as shown in Figure 20. As will be appreciated herefrom, the JOG MODE is performed within a given angular range (neutral angular range) of the predetermined initial angular position (neutral position) of the rotary disc 221d. That is to say, while the rotary disc 221d is within an angular range in which the output of the optical sensor 23d remains low, the SHUTTLE MODE is disabled. When the shuttle ring 220d is rotated clockwise or anticlockwise out of the given angular range, the output of the optical sensor 23d becomes HIGH. At the same time, according to rotation of the rotary disc 221d, the optical sensors 21d and 22d provide output pulses having a 90° phase-shifted relation to each other. As shown in Figure 20, the relationships between the pulses of the optical sensors 21d and 22d determining playback speed in the presence of a HIGH-level output from the optical sensor 23d are represented by angular positions ϑ₃, ϑ₂, ϑ₁ and ϑ₀ shown in Figure 20. In the illustrated embodiment, the relationship between the playback speed, the angular position of the rotary disc 221d, and the phases of the outputs of the optical sensors 21d and 22d are so arranged as to conform with the following Table 1:

**TABLE 1**

| Angle | ϑ₃ | ϑ₂ | ϑ₁ | ϑ₀ |
|---|---|---|---|---|
| 21 Output | LOW | HIGH | LOW | HIGH |
| 22 Output | LOW | LOW | HIGH | HIGH |
| Playback Speed | 1/5 | 1/1 | 2/1 | CUE REV |

### JOG MODE (Step 1020)

As set forth above, when the shuttle ring 220d is not manipulated and thus the rotary disc 221d is in the above-mentioned given angular range (neutral angle range), the JOG MODE is carried out. In the JOG MODE, the playback speed of the tape is adjusted in dependence upon the speed of rotation of the dial disc 210d. As explained above in the description of the CLOCK SET MODE, the system-controlling microcomputer 7 distinguishes between clockwise and anticlockwise rotation of the dial disc 210d by virtue of the phase relationship of the outputs of the optical sensors 21d and 22d. Also, the system-controlling microcomputer 7 controls the playback speed according to rotation of the dial disc 210d according to the following Table 2, in which T represents the pulse duration or period of the sensor output such as is shown in Figure 17:

**TABLE 2**

| T | T>t1 | t1<T<t2 | t2<T<t3 | t3<T |
|---|---|---|---|---|
| 21 Output | HIGH | LOW | HIGH | LOW |
| 22 Output | HIGH | HIGH | LOW | LOW |
| Playback Speed | X 2 | x 1 | SLOW | FIELD |

The reference value t3 is shorter than t2 which is shorter than t1. When the dial disc 210d is rotated at a speed higher than a high-speed threshold represented by the reference time t1, causing the pulse duration of the output of the optical sensor 21d to be shorter than the reference time t1, the playback speed will be set to twice the normal playback speed. On the other hand, when frame advance is desired, the dial disc 210d is rotated at a relatively low speed. As a result, the pulse duration T of the optical sensor 21d becomes longer than the reference time t₃. Therefore, the system-controlling microcomputer 7 advances the image on the TV monitor frame-by-frame with each given angle of dial disc rotation.

### CHANNEL SET MODE (Step 1026)

The system-controlling microcomputer 7 is normally ready for the CHANNEL SET MODE unless one or more of the other operational modes described above is ordered; and is always ready when the input selector switch 105 is set to the TV tuner position.

In the CHANNEL SET MODE, the channel is selected in substantially the same manner as discussed with respect to the TIMER SET MODE. Therefore, it is not necessary to explain the CHANNEL SET MODE operation in detail.

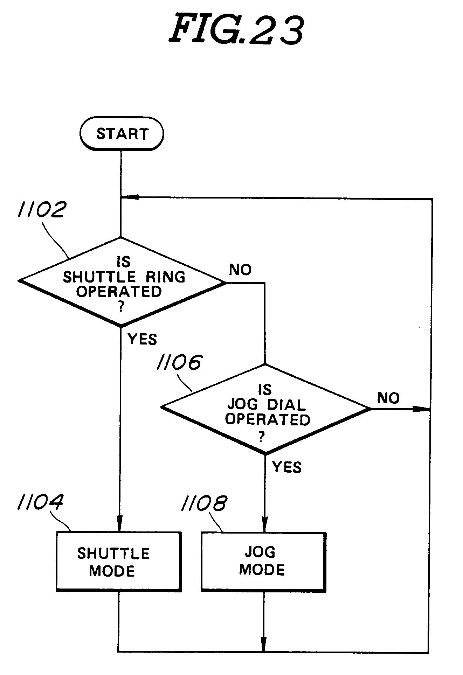

Figure 23 shows a flow chart of an editing program to be executed by the dial encoder (dial-encoding microcomputer or microprocessor) 24 in the remote control commander 20, for allowing adjustment of picture-feed speed in reproduction for performing an editing operation. In order to trigger the editing program, the JOG/SHUTTLE mode selector switch 25A is manually operated into the ON position. While the JOG/SHUTTLE mode selector switch 25A is in ON position, the editing program is executed continuously. In an editing operation, an editing point has to be ascertained. Therefore, in practice, in carrying out an editing operation, VTR signal reproduction is performed at a speed which is higher or lower than the normal reproduction speed by manual operation of the shuttle ring 220 to an angular position corresponding to the desired reproduction speed. The SHUTTLE mode of reproduction is terminated when the editing point is found. Upon termination of the SHUTTLE mode of operation, the picture is frozen at the field at which the SHUTTLE mode of operation is terminated. After this, the JOG mode of operation is performed by means of the dial disc 210 for feeding the picture in the forward and reverse directions for precisely setting the tape at the editing point. In the JOG mode of operation, the tape feed speed corresponds to the speed of rotation of the dial disc 210 as set forth above.

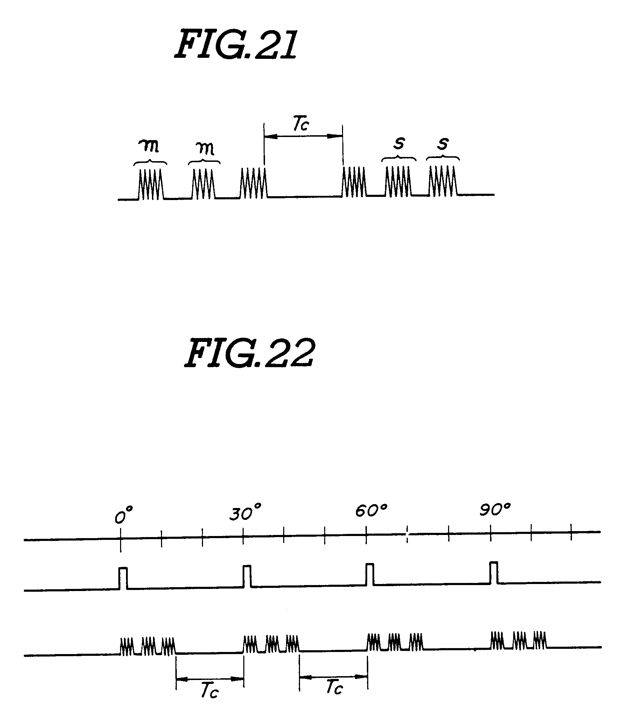

Therefore, in the execution of the editing program, a check is performed at a step 1102 to determine whether the shuttle ring 220 is operated. This is performed by checking the outputs of the optical sensors 21, 22 and 23, in similar manner to that set forth above in the description of the SHUTTLE MODE of operation in response to manual operation of the shuttle ring 220d of the rotary dial assembly 200d in the VTR deck 10. When angular displacement of the shuttle ring 220 is detected at the step 1102, then SHUTTLE mode of operation is commanded by the remote control commander 20, at a step 1104. Then, the dial-encoding microcomputer 24 produces a control command containing a mode selection data component m and a reproduction speed indicative data component s. Therefore, in this case, the output of the dial-encoding microcomputer 24 contains a SHUTTLE mode indicative date component m and a designated reproduction speed indicative data component s (which is determined by the magnitude and direction of angular displacement caused in the shuttle ring 220), which components are contained in the control command. The transmitter encoder 26 receives the control command from the dial-encoding microcomputer 24 and generates the infrared control command indicative signal modulated by the control command. Therefore, the encoded infra-red signal contains the mode selection data component m and the reproduction speed indicative component s, as shown in Figure 21. As will be appreciated from Figure 21, the mode selection data component m and the reproduction speed indicative component s are separated by a cancel-time Tc. The infrared signal thus formed is transmitted by the transmitter 27. The receiver 16 of the VTR deck 10 receives the transmitted infra-red signal modulated by the control command and feeds an output thereof to the remote-control encoding microcomputer 17. The remote-control encoding microcomputer 17 thus outputs a control command containing the mode selection data component m and the reproduction speed data indicative component s, corresponding to that produced by the dial-encoding microcomputer 24, and supplies the control command to the system controlling-microcomputer 7. The system controlling microcomputer 7 is responsive to the control command from the remote-control encoding microcomputer 17 to perform a SHUTTLE mode of operation similar to that commanded by the shuttle ring 220d of the rotary dial assembly 200d provided in the VTR deck 10.

On the other hand, if angular displacement of the shuttle ring 220 is not detected at the step 1102, a check is performed at a step 1106 as to whether the rotary dial disc 210 is being operated (rotated). If the rotary dial disc 210 is not operated, the process returns to the step 1102 to form a loop of the steps 1102 and 1106 for maintaining a stand-by state, as long as the remote control commander 20 is maintained in the JOG/SHUTTLE mode.

Though the illustrated embodiment of the remote control commander 20 maintains the JOG/SHUTTLE mode and holds the system in the stand-by state for allowing JOG mode or SHUTTLE mode operation until the JOG/SHUTTLE mode selector switch 25A is manually turned OFF, it would be possible to switch the operational mode of the remote control commander 20 automatically to the TIMER/CHANNEL mode, from the JOG/SHUTTLE mode, after a predetermined period of time if the rotary dial disc 210 and shuttle ring 220 are not operated during that period. This would be convenient for avoiding mis-operation that possibly might happen due to erroneously maintaining the JOG/SHUTTLE mode selector switch 25A in the ON position.

If angular displacement of the rotary dial disc 210 is detected at the step 1106, the JOG mode of operation is commanded at a step 1108. Therefore, the dial-encoding microcomputer 24 outputs a control command indicative of a JOG mode indicative data component m and a rotary dial disc position indicative component s. The rotary dial disc position indicative component s contains direction data indicative of the direction in which the rotary dial disc 210 is rotated and angle data indicative of the angular position of the rotary dial disc. The angle data may be in a form of pulse signals (Figure 22) produced at every given angle of displacement of the rotary dial disc 210. The transmitter encoder 26 is responsive to this control command from the dial-encoding microcomputer 24 to generate an infra-red signal modulated by the control command for transmission to the VTR deck 10. As set form above in the description of the SHUTTLE mode of operation, the infra-red signal from the transmitter 27 is received by the receiver 16 in the VTR deck 10 and demodulated by the remote-control encoding microcomputer 17 to be inputted as a control command to the system-controlling microcomputer 7. Therefore, the system-controlling microcomputer 7 causes the JOG mode of operation to take place according to rotation of the rotary dial disc 210 of the rotary dial assembly 200 of the remote control commander 20.

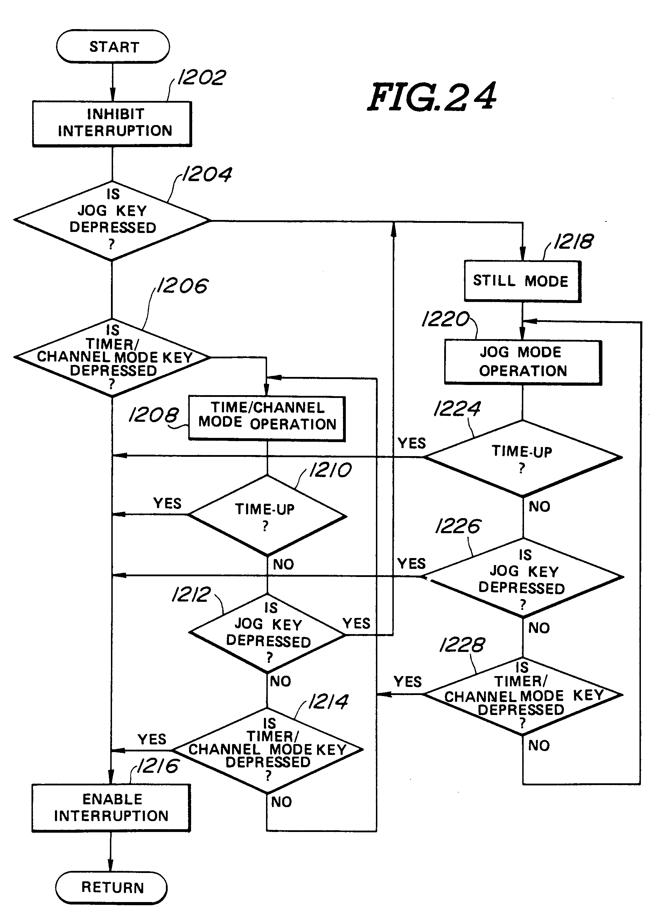

Figure 24 shows a flow chart of a control program triggered in response to operation (rotation) of one of the rotary dial disc 210 and the shuttle ring 220 of the rotary dial assembly 200. Immediately after commencement of execution of the program, interruption of execution is inhibited. Therefore, an interrupt mask flag may be set in the dial-encoding microcomputer 24 at a step 1202 for preventing the program from being interrupted. Thereafter, at a step 1204, the operational mode of the remote control commander 20 is checked by checking the position of the JOG/SHUTTLE mode selector switch 25A. (As set forth above, the JOG/SHUTTLE mode is selected while the JOG/SHUTTLE mode selector switch 25A is in the ON position.) If the JOG/SHUTTLE mode selector switch 25A is in the OFF position, a check is made at a step 1206 to determine whether or not the TIMER/CHANNEL mode selector switch 25B is operated to be in the TIMER mode position.

If the check performed at the step 1206 indicates that the TIMER/CHANNEL mode selector switch 25B is set at the TIMER mode position, the TIMER SET mode of operation as set forth above is performed at a step 1208 in order to accept instructions for starting recording of a TV programme at a designated date and time and at a designated TV channel. Thereafter, "time-up" is checked at a step 1210. In the step 1210, a period of time while neither the JOG dial (rotary dial disc) 210 nor the SHUTTLE ring 220 is operated is compared with a predetermined time-up threshold to detect the time-up. If time-up does not occur, a check is performed at a step 1212 to determine whether the JOG/SHUTTLE mode selector switch 25A is operated to the ON position. If the JOG/SHUTTLE mode selector switch 25A is held in the OFF position, then the TIMER/CHANNEL mode selector switch 25B is again checked at a step 1214. If the TIMER/CHANNEL mode selector switch 25B is held at the TIMER position, the process returns to the step 1208 to accept another set of instructions for recording another TV programme.

If it is detected at the step 1206 or the step 1214 that the TIMER/CHANNEL mode selector switch 25B is returned to the CHANNEL mode position, interruption is enabled at a step 1216 and execution of the program is ended. The same happens if time-up occurs during the step 1210.

If it is detected at the step 1204 or the step 1212 that the JOG/SHUTTLE mode selector switch 25A is in the ON position, a control command for setting the VTR deck 10 in a STILL mode is ouputted at a step 1218. As a result, the picture reproduced on the TV monitor is frozen. Then, the JOG/SHUTTLE mode of operation which was described above with respect to the editing program is performed at a step 1220. After the JOG/SHUTTLE mode of operation is terminated and, therefore, both the rotary dial disc 210 and the shuttle ring 220 have ceased being rotated, the elapsed time is measured and compared with a time-up threshold at a step 1224. If time-up occurs at the step 1224, the process goes to the step 1216. If time-up does not occur at the step 1224, the position of the JOG/SHUTTLE mode selector switch 25A is again checked at a step 1226 to determine whether it is in the OFF position. If the JOG/SHUTTLE mode selector switch 25A is held ON, the process returns to the step 1220 to wait for another JOG/SHUTTLE operation. On the other hand, if it is detected at the step 1226 that the JOG/SHUTTLE mode selector switch 25A is OFF, the TIMER/CHANNEL mode selector switch 25B is checked at a step 1228 to determine whether or not it is set at the TIMER position. If not, the process loops back to the step 1220. On the other hand, if it is detected at the step 1228 that the TIMER/CHANNEL mode selector switch 25B is in the TIMER position, the process goes to the step 1208 for performing a TIMER-SET operation.

As will be appreciated from the foregoing, the preferred embodiment of the present invention provides a remote control commander which can perform channel selection, timer-setting, and variable speed VTR reproduction with a simplified push-button arrangement. Furthermore, though the foregoing embodiment performs the specific functions as set forth, it would be possible additionally to perform a clock setting operation like that which can be performed by the rotary dial assembly of the VTR deck.

It should be noted that remote control arrangements embodying the present invention are applicable not only for remote control of a VTR deck, but also for remote control of any other video signal reproducing apparatus or system, such as videotex systems and so forth.

## Claims

1. A system for remotely controlling a video signal reproducing apparatus (10), the system comprising:
a controller (7) provided in the apparatus (10) for controlling operation of the apparatus (10) and selecting operational modes for accomplishing different functions according to a control command; and
a remote control commander (20) including push button switch means (25A,25B) for selecting operational modes of the apparatus (10) to cause production of a remote control signal carrying said control command to the apparatus (10), and a first rotary dial assembly (200) operable to produce signals indicative of rotation thereof so as to generate said control command;
characterised in that:
a second rotary dial assembly (200d) is provided in the apparatus (10), the second rotary dial assembly (200d) also being operable to produce signals indicative of rotation thereof so as to generate said control command; and
the controller (7) is operable to control the speed of reproduction of the video signal by the apparatus (10) to one of a plurality of different speeds in response to said control command from either of the first and second rotary dial assemblies (200,200d).

2. A system according to claim 1, wherein the first and second rotary dial assemblies (200,200d) function in a similar manner.

3. A system according to claim 2, wherein each rotary dial assembly (e.g. 200) comprises a first sensing means (21, 22, 213) for detecting the rotational speed of a rotary dial (210) of the respective rotary dial assembly (200), and for producing a rotational speed indicative signal as said control command for controlling reproduction of the video signal by the apparatus (10).

4. A system according to claim 2 or claim 3, wherein each rotary dial assembly (e.g. 200) comprises a second sensing means (21, 22, 23, 226) for detecting angular displacement of a ring (220) of the respective rotary dial assembly (200), and for producing an angular displacement indicative signal as said control command for controlling reproduction of the video signal by the apparatus (10).

5. A system according to claim 4 as dependent on claim 3, wherein the ring (220) of each rotary assembly (e.g. 200) is concentric with and rotatable independently of the respective dial (210).

6. A system according to claim 5, wherein the dial (210) and the ring (220) of each of the first and second rotary dial assemblies (200) are associated with a common rotary plate (221) with which the first and second sensing means (21, 22, 23, 213, 226) are associated for monitoring the direction, magnitude and speed of angular displacement thereof.

7. A system according to claim 6, wherein the dial (210) is associated with a click mechanism (212a, 233) providing a detent action at every given angle of displacement, which given angle corresponds to one frame of a video signal.

8. A system according to claim 3, or any one of claims 4 to 7 as dependent on claim 3, wherein the remote control commander (20) includes encoding means (24) responsive to the command signal from the first sensing means (21, 22, 213) for encoding a remote control signal to be transmitted therefrom for transmitting said remote control signal carrying said control command.

9. A system according to any one of claims 4 to 7, wherein the ring (220) of each rotary dial assembly (e.g. 200) comprises a shuttle control with the displacement signal from the second sensing means (21, 22, 23, 226) acting as a shuttle mode selector signal, and the controller (7) is responsive to the shuttle mode selector signal selectively to perform forward and reverse playback at a variable playback speed varying in accordance with the direction and magnitude of angular displacement of the ring (220).

10. A system according to claim 9, wherein the controller (7) is responsive to rotation of the dial (210) of each rotary dial assembly (e.g. 200) in the presence of a command for entry into a picture search mode to perform forward and reverse playback selectively at a given speed according to the speed and direction of rotation of the dial (210).

11. A system according to claim 10, wherein the push button switch means of the remote control commander (20) includes a switch (25A) for operating the apparatus (10) in a pause mode for temporarily stopping playback so as to freeze an image on a television monitor, the switch (25A) serving as a picture search mode triggering means.

12. A system according to claim 11, wherein said shuttle mode selector signal is produced from the remote control commander (20) in the presence of said command for entry into the picture search mode.

13. A system according to claim 3, or any one of claims 4 to 12 as dependent on claim 3, wherein the apparatus (10) has a timer-activated recording function as said first function, the push button switch means comprises a timer set mode switch (25B) manually operable to produce a timer set mode selector signal ordering the apparatus (10) to operate in a timer set operational mode, the apparatus (10) comprises a display (112) for displaying at least symbols representing a timer-activated recording start timing and recording end timing, and the controller (7) is responsive to said timer set mode selector signal for changing the value represented by said symbols on the display (112) on the basis of said signals from the first sensing means (21, 22, 213) indicative of the rotation angle and direction.

14. A system according to claim 13, wherein the controller (7) is responsive to the speed of rotation of the dial (210,210d) of each rotary dial assembly (200,200d) to adjust the rate of change of the values represented by said signals in accordance with the speed of rotation.

15. A system according to claim 13 or claim 14, wherein the apparatus (10) has a television tuner (6) for selecting a television channel and is operative to indicate the selected television channel on the display (112), the push button switch means includes means (25B) for triggering a channel set mode for the apparatus (10) for selecting a television channel, and the controller (7) is responsive to rotation of the dial (210) in the said channel set mode to adjust the channel selection according to angular displacement of the dial (210).

16. A system according to claim 15, wherein the controller (7) is responsive to the speed of rotation of the dial (210) as indicated by said signals produced by the first sensing means (21, 22, 213) to adjust the rate of change of television channel selection in the channel set mode.

## Patentansprüche

1. System zur Fernsteuerung eines Videosignale wiedergebenden Gerätes (10), wobei das System umfaßt:
eine Steuereinrichtung (7), die in dem Gerät (10) zur Steuerung der Betriebsweise des Gerätes (10) und zur Auswahl der Betriebszustände zur Ausführung verschiedener, einem Steuerbefehl entsprechender Funktionen vorgesehen ist, und
ein Fernbedienungsteil (20) mit Schaltertasten (25A,25B) zur Auswahl von Betriebszuständen des Gerätes (10), um ein den Steuerbefehl tragendes Fernsteuersignal für das Gerät (10) zu bewirken, und mit einer ersten Drehwähleinrichtung (200), die zur Erzeugung von Signalen zu betreiben ist, die die Rotation der Einrichtung anzeigen, um den Steuerbefehl zu erzeugen,
**gekennzeichnet dadurch,**
daß eine zweite Drehwähleinrichtung (200d) in dem Gerät (10) vorgesehen ist und die auch zur Erzeugung von Signalen zu betreiben ist, die die Rotation der Einrichtung anzeigen, um so den Steuerbefehl zu erzeugen und
daß die Steuereinrichtung (7) abhängig von dem Steuerbefehl von entweder der ersten oder der zweiten Drehwähleinrichtung (200,200d) so zu betreiben ist, daß sie die Geschwindigkeit der Wiedergabe der Videosignale durch das Gerät (10) auf eine von einer Vielzahl von Geschwindigkeiten einstellt.

2. System nach Anspruch 1,
bei dem die erste und die zweite Drehwähleinrichtung (200,200d) in derselben Weise arbeiten.

3. System nach Anspruch 2,
bei dem eine jede Drehwähleinrichtung (z.B. 200) einen ersten Sensor (21,22,213) zur Detektion der Rotationsgeschwindigkeit einer Drehwählscheibe (210) der betreffenden Drehwähleinrichtung (200) umfaßt und der Sensor ein die Drehgeschwindigkeit anzeigendes Signal als Steuerbefehl erzeugt, der zur Steuerung der Wiedergabe des Videosignals durch das Gerät (10) dient.

4. System nach Anspruch 1 oder 2,
bei dem eine jede Drehwähleinrichtung (z.B. 200) einen zweiten Sensor (21,22,23,226) umfaßt, der der Detektion des Winkelversatzes eines Ringes (220) der jeweiligen Drehwähleinrichtung (200) und der Erzeugung eines den Winkelversatz angebenden Signals dient, das als Steuerbefehl zur Steuerung der Wiedergabe des Videosignals durch das Gerät (10) dient.

5. System nach Anspruch 4, dieser abhängig von Anspruch 3,
bei dem der Ring (220) einer jeden Drehwähleinrichtung (z.B. 200) zur jeweiligen Wählscheibe (210) konzentrisch und dieser gegenüber unabhängig drehbar ist.

6. System nach Anspruch 5,
bei dem die Wählscheibe (210) und der Ring (220) einer jeden der ersten und zweiten Drehwähleinrichtung (200) einer gemeinsamen drehbaren Platte (221) zugeordnet sind, der der erste und der zweite Sensor (21,22,23,213,226) zur Anzeige der Richtung, der Größe und der Geschwindigkeit des Winkelversatzes derselben zugeordnet sind.

7. System nach Anspruch 6,
bei dem die Wählscheibe (210) mit einem Schnapp-Mechanismus (212A,233) versehen ist, der bei einem jeden gegebenen Winkelversatz eine Sperrwirkung auslöst, wobei der gegebene Winkel einem Halbbild des Videosignals entspricht.

8. System nach Anspruch 3 oder nach einem der Ansprüche 4 bis 7, diese abhängig von Anspruch 3,
bei der das Fernbedienungsteil (20) eine Kodiereinrichtung (24) hat, die auf das Befehlssignal des ersten Sensors (21,22,213) zur Kodierung eines Fernsteuersignals anspricht, das von dort ausgesandt wird, um das Fernsteuersignal, das den Steuerbefehl trägt, zu übertragen.

9. System nach einem der Ansprüche 4 bis 7,
bei dem der Ring (220) einer jeden Drehwähleinrichtung (z.B. 200) eine Hin- und Hersteuerung mit dem Versatzsignal des zweiten Sensors (21,22,23,226) umfaßt, wobei dieses als Hin- und Her-Betriebswahlsignal wirksam ist, und bei dem die Steuereinrichtung (7) auf das Hin- und Her-Betriebswahlsignal selektiv anspricht, um Vorwärts- und Rückwärts-Wiedergabe bei variabler Wiedergabegeschwindigkeit in Abhängigkeit mit der Richtung und der Größe des Winkelversatzes des Ringes (220) auszuführen.

10. System nach Anspruch 9,
bei dem die Steuereinrichtung (7) auf die Rotation der Wählscheibe (210) einer jeden Drehwähleinrichtung (z.B. 200) abhängig von einem Befehl ist, wobei der Befehl der Beginn einer Bildsuche ist, um wahlweise Vorwärts- und Rückwärtswiedergabe mit gegebener Geschwindigkeit entsprechend der Geschwindigkeit und der Richtung der Drehung der Wählscheibe (210) auszuführen.

11. System nach Anspruch 10,
bei dem die Schaltertasten des Fernbedienungsteils (20) einen Schalter (25A) umfassen, der dazu dient, das Gerät (10) in eine Pausenstellung zum zeitlichen Anhalten der Wiedergabe zu bringen, um ein Standbild auf dem Bildschirm zu haben, und wobei der Schalter (25A) als Auslösemittel für den Betriebszustand der Bildsuche dient.

12. System nach Anspruch 11,
bei dem das Hin- und Her-Betriebswahlsignal von dem Fernbedienungsteil (20) erzeugt wird, wenn der Befehl zum Beginn des Betriebszustandes der Bildsuche vorliegt.

13. System nach Anspruch 3, oder nach einem der Ansprüche 4 bis 12, diese abhängig von Anspruch 3,
wobei das Gerät (10) eine Zeitgeber-aktivierte Aufzeichnungsfunktion als die erste Funktion besitzt, der Tastenschalter einen Zeitgeber-Schalter (25B) hat, der von Hand zu betätigen ist, um ein Zeitgabe Betriebswahlsignal zu erzeugen, das dem Gerät (10) den Befehl gibt, in einem Zeitgabe-Betriebszustand zu arbeiten, das Gerät (10) ein Display (112) hat, das wenigstens Symbole für einen Zeitgeber-aktivierten Aufzeichnungsbeginn und Aufzeichnungsende anzeigt, und wobei die Steuereinrichtung (7) auf das Zeitgabe-Betriebswahlsignal anspricht, um den Wert zu verändern, der durch die Symbole auf dem Display (112) auf der Basis der Signale des ersten Sensors (21,22,213), die den Drehwinkel und die Richtung anzeigen, repräsentiert ist.

14. System nach Anspruch 13,
bei dem die Steuereinrichtung (7) auf die Rotationsgeschwindigkeit der Wählscheibe (210,210d) einer jeden der Drehwähleinrichtungen (200,200d) anspricht, um die Veränderungsrate der Werte einzustellen, die durch die besagten Signale abhängig von der Geschwindigkeit der Rotation repräsentiert sind.

15. System nach Anspruch 13 oder 14,
bei dem das Gerät (10) einen Fernseh-Tuner (6) zur Auswahl eines Fernsehkanals hat und dahingehend arbeitet, den ausgewählten Fernsehkanal auf dem Display (112) anzuzeigen, die Schaltertasten Mittel (25B) zum Triggern eines Kanalwählers des Gerätes (10) zur Auswahl eines Fernsehkanals haben und die Fernbedienungseinrichtung (7) auf Drehung der Wählscheibe (210) in diesem Betriebszustand der Kanalwahl anspricht, um die Kanalwahl entsprechend dem Winkelversatz der Wählscheibe (210) einzustellen.

16. System nach Anspruch 15,
bei dem die Fernbedienungseinrichtung (7) auf die Geschwindigkeit der Drehung der Wählscheibe (210), wie durch die von dem ersten Sensor (21,22,213) erzeugten Signale angezeigt, anspricht, um die Änderungsrate der Fernsehkanalauswahl im Betriebszustand der Kanaleinstellung einzustellen.

## Revendications

1. Un système pour télécommander un appareil de reproduction de signal vidéo (10), le système comprenant :
un dispositif de commande (7) incorporé dans l'appareil (10) pour commander le fonctionnement de l'appareil (10) et pour sélectionner des modes de fonctionnement pour accomplir différentes fonctions, conformément à un ordre de commande; et
un émetteur de télécommande (20) comprenant des moyens de commutation à touches (25A, 25B) pour sélectionner des modes de fonctionnement de l'appareil (10) de façon à générer un signal de télécommande qui achemine l'ordre de commande vers l'appareil (10), et une première structure de bouton tournant (200) que l'on peut actionner de façon à produire des signaux indiquant sa rotation, afin de générer l'ordre de commande;
caractérisé en ce que :
une seconde structure de bouton tournant (200d) est incorporée dans l'appareil (10), la seconde structure de bouton tournant (200d) pouvant également être actionnée de façon à produire des signaux indiquant sa rotation, afin de générer l'ordre de commande; et
le dispositif de commande (7) peut être actionné de façon à commander la vitesse de reproduction du signal vidéo par l'appareil (10), pour lui donner une valeur égale à une vitesse parmi un ensemble de vitesses différentes, sous la dépendance de l'ordre de commande provenant de l'une quelconque des première et seconde structures de bouton tournant (200, 200d).

2. Un système selon la revendication 1, dans lequel les première et seconde structures de bouton tournant (200, 200d) fonctionnent d'une manière similaire.

3. Un système selon la revendication 2, dans lequel chaque structure de bouton tournant (par exemple 200) comprend des premiers moyens de détection (21, 22, 213) qui sont destinés à détecter la vitesse de rotation d'un bouton tournant (210) de la structure de bouton tournant respective (200), et à produire un signal indiquant la vitesse de rotation, pour l'ordre de commande, dans le but de commander la reproduction du signal vidéo par l'appareil (10).

4. Un système selon la revendication 2 ou la revendication 3, dans lequel chaque structure de bouton tournant (par exemple 200) comprend des seconds moyens de détection (21, 22, 23, 226) qui sont destinés à détecter le déplacement angulaire d'un anneau (220) de la structure de bouton tournant respective (200), et à produire un signal indiquant le déplacement angulaire, pour l'ordre de commande, dans le but de commander la reproduction du signal vidéo par l'appareil (10).

5. Un système selon la revendication 4 considérée comme dépendante de la revendication 3, dans lequel l'anneau (220) de chaque structure de bouton tournant (par exemple 200) est concentrique par rapport au bouton respectif (210) et peut tourner indépendamment de ce dernier.

6. Un système selon la revendication 5, dans lequel le bouton (210) et l'anneau(220) de chacune des première et seconde structures de bouton tournant (200) sont associés à une plaque tournante commune (221), avec laquelle les premiers et seconds moyens de détection (21, 22, 23, 213, 226) sont associés pour contrôler la direction, l'amplitude et la vitesse de son déplacement angulaire.

7. Un système selon la revendication 6, dans lequel le bouton (210) est associé à un mécanisme d'encliquetage (212a, 233) qui produit une action de déclic à chaque angle de déplacement donné, cet angle donné correspondant à une image d'un signal vidéo.

8. Un système selon la revendication 3, ou l'une quelconque des revendications 4 à 7 considérées comme dépendantes de la revendication 3, dans lequel l'émetteur de télécommande (20) comprend des moyens de codage (24) qui réagissent au signal d'ordre provenant des premiers moyens de détection (21, 22, 213) de façon à coder un signal de télécommande à émettre par ces moyens, pour émettre le signal de télécommande qui achemine l'ordre de commande.

9. Un système selon l'une quelconque des revendications 4 à 7, dans lequel l'anneau (220) de chaque structure de bouton tournant (par exemple 200) constitue une commande de recherche grossière dans laquelle le signal de déplacement provenant des seconds moyens de détection (21, 22, 23, 226) remplit la fonction d'un signal de sélection de mode de recherche grossière, et le dispositif de commande (7) réagit au signal de sélection de mode de recherche grossière en accomplissant sélectivement une reproduction en avant ou en arrière avec une vitesse de reproduction variable qui varie conformément à la direction et à l'amplitude du déplacement angulaire de l'anneau (220).

10. Un système selon la revendication 9, dans lequel le dispositif de commande (7) réagit à la rotation du bouton (210) de chaque structure de bouton tournant (par exemple 200), en présence d'un ordre pour le passage dans un mode de recherche d'image, en accomplissant sélectivement une reproduction en avant ou en arrière à une vitesse donnée, conformément à la vitesse et à la direction de rotation du bouton (210).

11. Un système selon la revendication 10, dans lequel les moyens de commutation à touches de l'émetteur de télécommande (20) comprennent un interrupteur (25A) qui est destiné à faire passer l'appareil (10) dans un mode de pause pour arrêter temporairement la reproduction, afin de figer une image sur un moniteur de télévision, l'interrupteur (25A) remplissant la fonction de moyens de déclenchement de mode de recherche d'image.

12. Un système selon la revendication 11, dans lequel le signal de sélection de mode de recherche grossière est produit par l'émetteur de télécommande (20) en présence de l'ordre pour le passage dans le mode de recherche d'image.

13. Un système selon la revendication 3, ou l'une quelconque des revendications 4 à 12 considérées comme dépendantes de la revendication 3, dans lequel l'appareil (10) comporte une fonction d'enregistrement déclenché par minuterie pour la première fonction, les moyens de commutation à touches comprennent un commutateur de mode de réglage de la minuterie (25B) que l'on peut actionner manuellement pour produire un signal de sélection de mode de réglage de la minuterie, ordonnant à l'appareil (10) de fonctionner dans un mode de fonctionnement de réglage de la minuterie, l'appareil (10) comprenant un dispositif de visualisation (112) prévu pour visualiser au moins des symboles représentant l'heure de début d'enregistrement déclenché par minuterie et l'heure de fin d'enregistrement, et le dispositif de commande (7) réagit au signal de sélection de mode de réglage de la minuterie en changeant la valeur qui est représentée par les symboles sur le dispositif de visualisation (112), sur la base des signaux provenant des premiers moyens de détection (21, 22, 213) indiquant l'angle et la direction de rotation.

14. Un système selon la revendication 13, dans lequel le dispositif de commande (7) réagit à la vitesse de rotation du bouton (210, 210d) de chaque structure de bouton tournant (200, 200d), en réglant la vitesse de changement des valeurs qui sont représentées par les signaux précités, conformément à la vitesse de rotation.

15. Un système selon la revendication 13 ou la revendication 14, dans lequel l'appareil (10) comporte un syntoniseur de télévision (6) qui est destiné à sélectionner un canal de télévision, et il indique le canal de télévision sélectionné sur le dispositif de visualisation (12), les moyens de commutation à touches comprennent des moyens (25B) qui sont destinés à déclencher un mode de réglage de canal pour l'appareil (10), dans le but de sélectionner un canal de télévision, et le dispositif de commande (7) réagit à la rotation du bouton (210) dans le mode de réglage de canal en fixant la sélection de canal conformément au déplacement angulaire du bouton (10).

16. Un système selon la revendication 15, dans lequel le dispositif de commande (7) réagit à la vitesse de rotation du bouton (210) qui est indiquée par les signaux précités produits par les premiers moyens de détection (21, 22, 213), en réglant la vitesse de changement de la sélection de canal de télévision dans le mode de réglage de canal.
